# EUROPEAN PATENT APPLICATION

(11) **EP 1 508 957 A1**
(43) Date of publication of application: **23.02.2005**
(21) Application number: 03292073.8
(22) Date of filing: 22.08.2003
(51) Int. Cl.: H02M 3/158, H02J 7/00, H02M 1/00

(54) **System for controlling the energy flow in an energy conversion system**

(71) Applicant: ALCATEL, 75008 Paris (FR)
(72) Inventor: Sanchez De Castro, Luis, 28320 Pinto-Madrid (ES); Diaz Guerra Mora, Valentin, 28037 Madrid (ES)
(74) Representative: Sciaux, Edmond

(57) **Abstract**

System for controlling the energy flowing in an energy conversion system having two energy distribution buses of different nominal voltage value connected through a switched power converter without electric insulation comprising a control rectification and freewheeling switching elements and a pulse sequencer inhibiting switching on/off of the freewheeling switch when some or several conditions are verified.

## Description

### OBJECT OF THE INVENTION

The present invention refers to a process for controlling operation of a converter in an energy conversion system.

More specifically the present invention refers to a process and system for controlling the energy flow between two sources of energy separated by a bi-directional power converter.

### STATE OF THE ART

At the present time, in the new electrical architectures for vehicles two energy distribution buses are employed, of different nominal voltage value, connectable through a power converter. This converter has capacity, frequently, for bi-directional operation and can utilise topologies such as "Boost" or "Buck" without insulation.

In each distribution bus a voltage source, such as a battery, 42V and 14V respectively, and different loads, e.g., control modules, lights, sensors, or the like, are connected. Depending on operation of the converter it is possible to transfer energy from a first distribution bus to a second distribution bus and vice-versa. These modes are called up and down.

In the case of a bi-directional power converter, an external signal is necessary, indicating the desired energy flow direction: up or down. In the interests of an enhanced description, a converter will be considered, operating in down mode, although being extendible to the up mode.

The flow of energy is controlled by means of control of the duty cycles of two switching elements, a first switched high side transistor and a second freewheeling switched transistor, likewise known as synchronous rectification or "low side switch". In up mode the low side switch is the one utilised for regulating, while in down mode the high side switch is the one employed to regulate the output voltage.

The control of said duty cycle D is performed by means of a pulse width modulator PWM, such that when the energy conversion system operates normally, both periods of conduction are complementary at every moment, including idling times (times of inoperancy) between both signals. That is, the PWM modulator generates two control signals, such that each of them is applied to a switch, respectively, so that one of the switched transistors is in ON conduction state, the other transistor is in OFF non-conduction state and vice-versa.

In some cases the PWM modulator generates a single control signal to drive the high side switch, namely main switch, it being necessary to add an auxiliary circuitry to generate the second control signal in order to drive the freewheeling switch.

A PWM modulator and a feedback loop take control of the power stage for proper regulation. Several control modes are well known in the literature, the most important one being the voltage mode, peak current control mode and average current control mode. When current control mode is used, a current sensor element (current transformer or resistor) is necessary for the regulation loop.

Thus, the control stage includes the PWM modulator, a current sensor element if current control mode is used, and an output voltage sensor plus a feedback loop for proper regulation.

In addition, when these converters are bi-directional, an external command signal is necessary to establish the operation mode of the converter: up or down.

Under certain circumstances of the conversion system operation transients can occur, capable of damaging the converter. For instance, in step-down operation when it is necessary to reduce the output voltage due to a control command imposed by the vehicle main control system or Electronic Control Unit (ECU), a transient appears due to the interaction between the battery at the output (slow response) and the control loop of the converter (quick response). The battery voltage cannot change quickly (usually seconds) because it needs some discharge time, while the converter tries to fix it almost instantaneously by reducing the duty cycle D of the main switch.

Due to this reduction of the duty cycle, on-time of the freewheeling switch, its duty cycle is 1-D, increases. When the control loop is saturated, it tries to reduce the duty cycle as much as possible, D is zero or almost zero and the freewheeling switch is almost constantly or permanently switched-on. In fact, this condition means a short circuit for a period of time at the output that produces a discharge of the energy stored in the battery. This energy is dissipated on the said switch and the series elements such as inductor, sensor resistance, or the like, and can destroy the converter or cause a failure

In addition, during this period up to the moment that the duty cycle D=0, some energy is transferred to the input of 42V through the body-parasitic diode of the high-side switch. This energy transfer means a voltage increase at the input. As a result, there is a risk of activating the input overvoltage protection due to voltage rise.

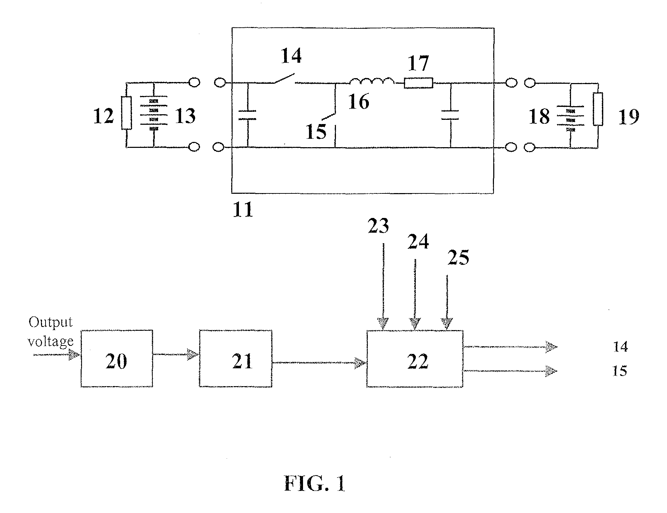

Moreover, the discharge of the energy stored at the output battery means an inverse current circulation through the inductor. When a current sensor element (for regulation or protection) is used in this branch, shown fig. 1, the measurement is a positive voltage during normal operation. However, during this transient of inverse flow of current through the inductor, this signal becomes a negative voltage, and there is a risk of malfunction in the regulation stage because the sensor signal is not suitable (opposite polarity).

Both effects, short-circuit and input voltage increase, are dangerous and may produce a failure of the converter.

These problems are related to the use of synchronous rectification instead of a diode. The converter remains in this non-recommended stage up to the moment that the output voltage reaches the value fixed, and the suitable duty cycle D for the main switch is established again.

Accordingly, it becomes necessary to propose an energy conversion system where two energy distribution buses of different nominal voltage value would be connectable through a converter without electric insulation, which would comprise at least a active freewheeling switch or synchronous rectifier, a control link and a PWM modulator, such as to avoid the problems mentioned above during a transient and, as result, to be capable under those transient conditions of handling power between both buses in a regulated controlled way.

PWM controllers found in the state-of-the-art do not provide this capability of deactivating the synchronous rectification switch under these conditions, so not suited for this application and these operating conditions.

This phenomenon has been described for a case of energy transfer from the high voltage bus (42V) to the low voltage bus (14V), but it also appears in the opposite case (14V -> 42V) and changing the control signifies that the main switch is the "low side switch".

It should be pointed out that in this step-up mode the continuous ON state of the synchronous switch (in this mode the high-side switch) makes a short-circuit between the two batteries.

### CHARACTERISATION OF THE INVENTION

To resolve the problems described above an energy conversion system is proposed wherein two energy distribution buses of different nominal voltage value can connect through a switched power converter without electric insulation; where the switched power converter comprises a control rectification switching element, a freewheeling switching element and a pulse sequencing means inhibiting switching on and off of the freewheeling switching element when some or several of the following conditions are verified:
- the current sensor detects a change in the flow direction of the current,
- the 1-D duty cycle of the freewheeling switching element is very high in comparison with that which would correspond in normal operation or is permanently switched-ON,
- the control circuit has ordered a reduction in the output voltage.

One object of the present invention is to utilise a switched converter without electric insulation, which includes a control switched transistor and a freewheeling switched transistor, performed by means of a conversion topology with simplicity of operation and high efficiency.

A further object of the present invention is to employ a control element that would include a pulse sequencer respecting which in normal operating conditions of the converter the switching signals of the switched transistors will be complementary, but which under certain operating conditions of the same the switching signals of the switched transistors will be independent, as long as said conditions persist.

An additional object of the present invention is to obtain an overall high efficiency from the energy conversion system.

Yet a further object of the invention is to avoid over-voltage protection operating when the conditions are not over-voltage ones.

Another further object of the invention is to control the transfer of energy from the output to the input due to the mutual interaction between the control loop which includes a pulse width modulator PWM and the battery voltage.

Another object of the invention is to provide for the freewheeling transistor remaining in permanent switched-on or almost permanent in the event of control loop saturation, when this loop keeps the main switch in the OFF state to avoid anomalous or particular operation that could lead to destruction of the power converter.

### BRIEF EXPLANATION OF THE FIGURES

A more detailed explanation of the invention is given in the following description based on the attached figures in which:
- Figure 1 represents in a block diagram a switched power converter without electric insulation according to the invention, and
- Figure 2 represents in a block diagram another embodiment of the switched power converter without electric insulation according to the invention.

### DESCRIPTION OF THE INVENTION

Figure 1 represents an energy conversion system which includes two sources of electric energy such as two batteries with different nominal voltage, for example, a first 13 battery of 42V and another second 18 battery of 14V, interconnected through a means 11 for the conversion of switched synchronous energy without electric insulation such as a switched converter BOOST or BUCK. Each energy distribution bus can be connected to a battery 13, 18 and to a plurality of electric charges 12, 19.

The switched converter 11 includes a first element 14 for switching control in the event of operating in down mode (42V -> 14V) and a second element 15 for freewheeling switching, such that it is possible to control the switching of each switched transistor by means of a switching signal generated by a pulse width modulator PWM 21. For example, each switching element 14, 15 can be a field effect transistor MOSFET, respectively.

These control signals generated by the PWM modulator 21 are sent to a pulse sequencing means 22 which, in turn, sends them to the switches 14 and 15. These control signals can undergo modification depending on the state of other inputs 23, 24, 25 to said block, which are described herebelow.

In normal operation it has to be observed that each one of the switching signals is applied to the corresponding control terminal of the switches 14, 15 respectively. Moreover, during operation under normal conditions of the converter 11 both switching control signals are complementary, including idle times.

As seen in Figure 1, a first end, drain, of the transistor 14 for control rectification can be connected in series to an end of the first battery 13, and a second end, source, of the same transistor 14 can be connected in series to one end of an inductor 16.

The other end of the inductor 16 can be connected in series to a current sensor 17 can be connected with a preceptor 20 of output voltage and regulation voltage, namely control circuit for taking samples of the current power which flows along the inductor 16 in order to detect changes in the power flow direction between both distribution buses. The other end of the current sensor 17 can be connected to one end of the second battery 18.

Operation under normal conditions will not be explained, inasmuch as known to those skilled in the art.

However, when the conditions of operation of the energy conversion system diverge from normal operation, i.e., energy flow from the input towards the output, said particular operation of the converter 11 can endanger the converter itself or the power conversion system taken overall as already explained.

To detect said anomalous situation one or several of the following parameters can be supervised: duty cycle of the freewheeling switch 15 which is very large, i.e., the length of time of the switched-ON is high compared with that which would correspond under normal operation, signal 23; inversion of the current flow in the inductor 16, signal 24, generated by the current sensor 17; and the order from control to reduce the output voltage to below the current voltage value of the battery.

In order to protect the converter 11 and the energy conversion system as a whole, watch on the current control direction is opted for and the value of the same through the current sensor 17 and the control circuit 20. Thus, when in the sensor 17 an inversion is detected of the flow direction of the current circulation, negative value of the current measurement, a signal is generated which is applied to the pulse sequencer 22 so that the freewheeling switch 15 will remain in switched-OFF, non-conduction state, in which way short-circuit in the output can be avoided and, therefore, the transfer of energy from the output towards the input, for example, from the first battery 14 of 14V towards the second battery 13 of 42V.

It has to be observed that the PWM modulator 21 continues generating the switching signal for the main transistor 14 or both transistors 14, 15 depending on the implementation. Nevertheless, the pulse sequencer 22 avoids, under these conditions, switching ON of the freewheeling switch 15.

Once the battery 18 has achieved the desired voltage value due to its discharge, the control circuit 20 allows the switching control signals to reach the control terminals of both transistors 14, 15, respectively.

A second variant of this method of protection consists of this, that when the conditions of the case described above are verified, the pulse sequencer 22 inhibits both switches 14 and 15.

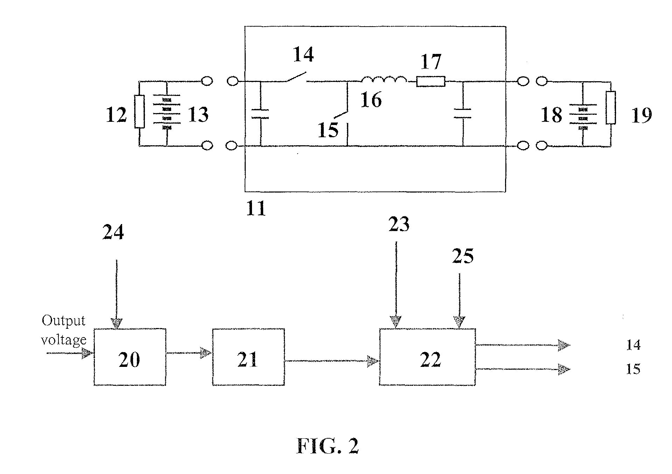

Figure 2 represents another embodiment, where the signal 24 is sent from the current sensor 17 to the control circuit 20, which performs a function of taking samples of the output voltage and the regulation loop. In the face of conditions such as those expressed above, duty cycle D very small or nil, order for reduction of the output voltage and negative value of the voltage of the current sensor 17, this control circuit 20 produces a saturation of the control loop. This saturation of the control loop produces a nil, or very small, duty cycle D of the main transistor 14 and, consequently, the freewheeling switch 15 is turned off by the pulse sequencer 22.

Finally, in reference to figure 1, as has been described the converter 11 can be bi-directional, although the above description has referred to the down mode. For this purpose a signal 25 is used applied to the pulse sequencer 22 which indicates to it whether to be found operating in down or up mode, such that in the face of the anomalous situation described above it is able to turn off the switch 14 or 15.

The case described is likewise applicable to multiphase converters, in which various similar power stages or "phases" are staggered in time with the aim of improving some electrical features such as ripple of the output voltage, losses, or the like.

An additional advantage of this invention due to the capability of avoiding a reverse current flow is the applicability of paralleling power converters. It is well known in the state-of-the-art that when several converters are connected in parallel, due to the mismatch in the output voltage, it is possible that one converter will work as a sink element, absorbing current from the other converters instead of providing it to the load. This problem is usually solved by adding O-ring diodes or proper control signals as described in the state-of-the-art. The invention explained here can be used as a method for paralleling converters because it avoids the reverse current flow inside the converter as explained above. This condition would be detected as anomalous conditions, negative voltage at the current sensor 17 as shown above and the circuitry would work as described, operation of the pulse sequencer 22.

## Claims

1. **Switched power converter** without electric insulation suitable for connecting two voltage sources (13, 18) of different nominal voltage value of an energy conversion system operating in buck mode which comprises a control rectification commutation (14), a freewheeling switching element (15); **characterized in that** the switched power converter (11) without insulation moreover comprises a means (22) for pulse sequencing which inhibits switching on and off of the freewheeling switching element (15) when at least one of the following conditions is found:
- current sensor (17) detects a change in the flow of current flowing through said current sensor (17),
- duty cycle 1-D of freewheeling switching element (15) is higher compared with that which would correspond during normal operation or remaining permanently switched-ON,
- control unit which orders a reduction of the output voltage.

2. **Switched power converter** according to claim 1; inhibiting the means (22) of pulse sequencing the driving control signals corresponding to the control rectification switching element (14) and the freewheeling switching element (15) respectively.

3. **Switched power converter** according to claim 2; the pulse sequencing means (22) and a pulse width modulator PWM (21) being included in a single integrated circuit.

4. **Switched power converter** according to claim 3; the switched power converter (11) without insulation comprising a sensor (20) of output and regulation voltage which receives a signal from the current sensor (17) of a value opposed to that measured during normal operation, acting to provoke saturation of the control loop.

5. **Switched power converter** according to claims 1 and 4; connecting the current sensor (17) in series with the control rectification switching element (14) or with the freewheeling switching element (15), or else a combination of both.

6. **Switched power converter** according to claims 1 to 5; operating the switched power converter (11) without insulation in boost mode.

7. **Switched power converter** according to any preceding claims 1 to 6; being each switching element (14, 15) a field effect transistor MOSFET, respectively.

8. **Energy conversion system** suitable for controlling the energy flowing between two voltage sources (13, 18) of different nominal voltage value connected by means of a switched power converter (11) without electric insulation according to Claims 1 to 7.
